# DEMANDE DE BREVET EUROPEEN

(11) **EP 2 978 161 A2**
(43) Date de publication de la demande: **27.01.2016**
(21) Numéro de dépôt: 15177194.6
(22) Date de dépôt: 17.07.2015
(51) Int. Cl.: H04L 9/08

(54) **PROCÉDÉ DE SAUVEGARDE D'UN SECRET D'UN UTILISATEUR ET PROCÉDÉ DE RESTAURATION D'UN SECRET D'UN UTILISATEUR**

(30) Priorité: 21.07.2014 FR 1457016
(71) Demandeur: Ercom Engineering Réseaux Communications, 78140 Vélizy-Villacoublay (FR)
(72) Inventeur: Balc'h, Martin, 75014 Paris (FR); Kowalski, Julien, 35170 Bruz (FR); Laubacher, Eric, 78390 BOIS D'ARCY (FR); Lehoux, Renaud, 78210 SAINT-CYR L'ECOLE (FR)
(74) Mandataire: Ipside

(57) **Abrégé**

La présente invention concerne un procédé (100) de sauvegarde d'un secret d'un utilisateur qui comporte:
- détermination (13) d'un ensemble de dépositaires obligatoires, possédant une clef publique, possiblement vide,
- détermination (14) d'un ensemble de dépositaires non obligatoires, possédant une clef publique, possiblement vide,
- sélection (15) par l'utilisateur d'une valeur limite prédéterminée de nombre de partitions nécessaires pour restaurer le secret, ladite valeur limite prédéterminée étant supérieure ou égale au nombre de dépositaires obligatoires, si l'ensemble de dépositaires non obligatoires déterminé est vide
- création (16) d'un nombre de partitions principales égal au nombre de dépositaires obligatoires, comportant une partie du secret et correspondant à un dépositaire obligatoire ;
si l'ensemble de dépositaires non obligatoires déterminé n'est pas vide
- création (16) d'un nombre de partitions principales égal au nombre de dépositaires obligatoires plus un, comportant une partie du secret et chaque partition sauf une correspondant à un dépositaire obligatoire et
- élaboration (17) d'un nombre de partitions secondaires comportant le contenu de la partition principale restante partagée selon une méthode de partage d'un secret et correspondant à un dépositaire non obligatoire ;
- chiffrement (18) de chaque partition au moyen de la clef publique du dépositaire correspondant et
- enregistrement (19) de chaque partition chiffrée sur un serveur.

La présente invention se rapporte également à un procédé de restauration d'un secret d'un utilisateur.

## Description

### Domaine de l'invention

La présente invention vise un procédé de sauvegarde d'un secret d'un utilisateur, un procédé de restauration d'un secret d'un utilisateur, un dispositif de sauvegarde d'un secret d'un utilisateur et un dispositif de restauration d'un secret d'un utilisateur. L'invention s'applique notamment au domaine de la cryptographie. La présente invention s'applique à la sauvegarde et à la restauration de secrets et plus particulièrement dans le domaine des moyens de stockage de type « cloud », dans lequel le secret à sauvegarder est un magasin de clefs (« keystore » en terminologie anglo-saxonne).

### État de la technique

Actuellement, la sauvegarde de secrets, tels des mots de passe par exemple, peut être effectuée de plusieurs façons. Tout d'abord, il existe des moyens de sauvegarde de secrets protégés par mot de passe, tels l'application Keeper (marque déposée) ou l'application iTunes (marque déposée) qui permet la sauvegarde et la restauration de données contenues dans un dispositif commercialisé par la Société Apple au moyen d'un mot de passe. Cette technique demande à l'utilisateur de retenir un mot de passe différent en fonction de la nature du secret. De plus, la sécurité du secret mise en oeuvre par un mot de passe dépend de la complexité du mot de passe qui est inversement proportionnelle à la facilité de mémorisation du mot de passe par l'utilisateur ou la facilité pour l'utilisateur à taper le mot de passe. Un compromis doit être fait par l'utilisateur entre la sécurité et l'ergonomie du système.

L'article « Using a high-performance, programmable secure coprocessor » de Sean W. Smith et al. publié en février 1998 pour la « 2nd International Conference on Financial Cryptography », donne un deuxième exemple de sauvegarde de secrets : la sauvegarde de secrets protégée par clef de chiffrement gérée par un matériel de confiance. L'utilisation d'un matériel de confiance résout le problème de compromis posé par la sauvegarde de secrets protégée par mot de passe. Cependant, l'utilisateur doit avoir le matériel de confiance à portée de main en toutes circonstances.

Une autre technique de sauvegarde de secret est la sauvegarde protégée par une clef de chiffrement gérée par un tiers de confiance comme par exemple, le service « server side encryption » (chiffrement côté serveur) de Amazon S3 (marque déposée). Le service de « server side encryption » permet de chiffrer des données sauvegardées sur un espace de stockage de type « cloud » de Amazon S3, le chiffrement étant géré par Amazon.

De façon similaire, il existe aussi des méthodes de séquestre de clefs qui permettent un accès par une autorité de séquestre auxdites clefs bien que l'utilisateur ait oublié les secrets permettant d'accéder auxdites clefs. Les méthodes de séquestre de clefs sont expliquées dans le rapport « Requirements for key recovery products » du NIST (acronyme de « National Institute of Standards and Technologies » en terminologie anglo-saxonne) publié en novembre 1998. Les solutions par sauvegarde chiffrée, où la clef de chiffrement est gérée par un tiers, résolvent les problèmes soulevés par les deux premières techniques. En effet, cette technique ne requiert aucun mot de passe, ni ne nécessite l'emploi d'un matériel de confiance, mais l'utilisateur doit faire confiance à un tiers gérant la clef de chiffrement et qui a accès aux données sauvegardées par l'utilisateur.

Finalement, différentes méthodes de partage des secrets existent et consistent à partager, entre plusieurs tiers, les éléments secrets à sauvegarder. Les méthodes de partage de secrets sont décrites dans les articles « Safeguarding cryptographic keys » de Blakley, G. R. publié en juin 1979 dans « Proceedings of the 1979 AFIPS National Computer Conference, Volume 48 » et « How to share a secret » de Shamir, Adi publié en novembre 1979 dans « Magazine Communications of the ACM, Volume 22 Issue 11 ». Les méthodes de partage de secrets proposent des méthodes mathématiques de partage, qui ne sont pas conçues pour être ergonomiques.

Le brevet américain N° US 7 916 871 décrit une méthode de sauvegarde de clefs d'un matériel sensible par partage de secrets. La méthode décrite dans le brevet américain N° US 7 916 871 est telle que des dépositaires de parties d'un secret effectuent de façon concertée les actions de sauvegarde et de restauration. Un utilisateur voulant initier la sauvegarde ou la restauration du secret ne peut utiliser la méthode décrite. De plus, la méthode décrite dans le brevet américain N° US 7 916 871 est de faible résistance face aux attaques au long court.

### Objet de l'invention

La présente invention vise à remédier à tout ou partie de ces inconvénients.

À cet effet, selon un premier aspect, la présente invention vise un procédé de sauvegarde d'un secret d'un utilisateur qui comporte les étapes suivantes :
- détermination d'un ensemble de dépositaires dit « dépositaires obligatoires », chaque dépositaire possédant une clef publique, cet ensemble étant possiblement vide,
- détermination d'un ensemble de dépositaires dit « dépositaires non obligatoires », chaque dépositaire possédant une clef publique, cet ensemble étant possiblement vide,
- sélection par l'utilisateur d'une valeur limite prédéterminée de nombre de partitions nécessaires pour restaurer le secret, ladite valeur limite prédéterminée étant supérieure ou égale au nombre de dépositaires obligatoires,
   si l'ensemble de dépositaires non obligatoires déterminé est vide
   - création d'un nombre de partitions dites « partitions principales » égal au nombre de dépositaires obligatoires, chaque partition comportant au moins une partie du secret et correspondant à un dépositaire obligatoire ;
   si l'ensemble de dépositaires non obligatoires déterminé n'est pas vide
   - création d'un nombre de partitions dites « partitions principales » égal au nombre de dépositaires obligatoires plus un, chaque partition comportant au moins une partie du secret et chaque partition sauf une correspondant à un dépositaire obligatoire et
   - élaboration d'un nombre de partitions dites « partitions secondaires » comportant le contenu de la partition principale restante partagée selon une méthode de partage d'un secret et correspondant à un dépositaire non obligatoire ;
- chiffrement de chaque partition principale et de chaque partition secondaire au moyen de la clef publique du dépositaire correspondant et
- enregistrement de chaque partition chiffrée sur un serveur.

On rappelle ici qu'une clef publique est une des clefs d'un couple de clefs (aussi appelé « biclef ») d'une infrastructure à clefs publiques (en terminologie anglo-saxonne « Public Key Infrastructure », ou « PKI »).

Ces modes de réalisation ont l'avantage de présenter une sécurité accrue du secret sauvegardé puisque la confidentialité et l'intégrité du secret sauvegardé sont indépendantes de la qualité d'un mot de passe. De plus, la sécurité du secret sauvegardé ne dépend pas de la confiance de l'utilisateur en un tiers unique. En outre, l'utilisateur n'a pas besoin de mémoriser un élément tel un mot de passe ni d'avoir un matériel de confiance. Ces modes de réalisation permettent également d'obtenir une ergonomie et une intégrité accrues. En effet, la sauvegarde du secret est entièrement automatisée une fois que l'utilisateur a sélectionné chaque dépositaire du secret.

Dans des modes de réalisation, au moins un dépositaire est un serveur.

Avoir un serveur en tant que dépositaire permet d'avoir une partition de la sauvegarde correspondant à un serveur. Lors d'une restauration du secret, la procédure de restauration est simplifiée pour l'utilisateur et la durée de la procédure est diminuée. De plus, le serveur est disponible à tout moment.

Dans des modes de réalisation, au moins un dépositaire est un utilisateur.

Ces modes de réalisation présentent l'avantage de pouvoir authentifier un dépositaire de façon vocale ou visuelle par exemple, et de pouvoir détecter l'auteur d'une divulgation d'une partition du secret. En effet, certains problèmes de compromission d'un serveur sont évités et l'utilisateur peut évaluer le niveau de confiance qu'il place en un utilisateur dépositaire. De plus, dans les modes de réalisation dans lesquels l'utilisateur sélectionne au moins un serveur dépositaire et au moins un utilisateur dépositaire, la sauvegarde et une restauration éventuelle du secret ne sont pas uniquement informatique. L'utilisateur du dispositif peut donc avoir une assurance de la confidentialité en cas d'attaque du serveur.

Selon un deuxième aspect, la présente invention vise un procédé de restauration d'un secret d'un utilisateur qui comporte les étapes suivantes :
- établissement d'un canal sécurisé entre l'utilisateur et au moins une valeur limite prédéterminée de dépositaires d'une partition du secret, ladite valeur limite prédéterminée correspondant à un nombre de partitions du secret nécessaires pour restaurer le secret, l'utilisateur authentifiant chaque dépositaire et chaque dépositaire authentifiant l'utilisateur,
- demande de restauration du secret par l'utilisateur à un serveur,
- déchiffrement d'au moins la valeur limite prédéterminée de partitions, chaque partition étant déchiffrée au moyen d'une clef privée dudit dépositaire correspondant,
- transmission à l'utilisateur par chaque dépositaire correspondant audit dépositaire déchiffrée, au moyen du canal sécurisé établi et
- reconstruction par l'utilisateur du secret à partir de chaque partition déchiffrée.

L'avantage de ces modes de réalisation est de répartir le secret afin de rendre une restauration possible à partir d'une partie des partitions du secret. De plus, chaque dépositaire est indépendant des autres et la partition du secret lui correspondant ne divulgue pas le nombre de dépositaires et le contenu des autres partitions. De plus, le canal sécurisé établi assure la confidentialité et l'intégrité des données transitant par le canal et l'établissement du canal sécurisé est indépendant d'une mémorisation d'un secret par un utilisateur.

Dans des modes de réalisation, le procédé de restauration d'un secret objet de la présente invention comporte, en outre, les étapes suivantes :
- envoi d'un challenge d'authentification à l'utilisateur par le serveur,
- transmission par l'utilisateur au serveur de la réponse au challenge d'authentification authentifiant l'utilisateur auprès du serveur.

L'avantage de ce mode de réalisation est de permettre au serveur d'authentifier l'utilisateur demandant la restauration du secret ou d'authentifier un utilisateur dépositaire acceptant la restauration d'une partition du secret.

Dans des modes de réalisation, le procédé de restauration d'un secret objet de la présente invention comporte, en outre, une étape d'établissement d'un canal sécurisé entre l'utilisateur et un utilisateur dépositaire qui comporte les étapes suivantes :
- détermination d'un mot de passe par l'utilisateur,
- envoi par l'utilisateur d'un échange Diffie-Hellman dit "échange Diffie-Hellman utilisateur" chiffré par ledit mot de passe à un utilisateur dépositaire au moyen du serveur,
- détermination d'un mot de passe dit « mot de passe dépositaire » par l'utilisateur dépositaire,
- envoi par ledit utilisateur dépositaire d'un échange Diffie-Hellman dit « échange Diffie-Hellman dépositaire » chiffré par ledit mot de passe dépositaire à l'utilisateur au moyen du serveur,
- authentification réciproque de l'utilisateur et dudit utilisateur dépositaire par un canal tiers,
- échange de chaque mot de passe entre l'utilisateur et ledit utilisateur dépositaire au moyen dudit canal tiers,
- déchiffrement de l'échange Diffie-Hellman dépositaire au moyen du mot de passe dépositaire par l'utilisateur et
- déchiffrement de l'échange Diffie-Hellman utilisateur au moyen du mot de passe par ledit utilisateur dépositaire.

On rappelle ici que l'échange Diffie-Hellman, en cryptographie, consiste en un échange de clefs dans une méthode par laquelle deux personnes peuvent se mettre d'accord sur un nombre (qu'ils peuvent utiliser comme clef pour chiffrer la conversation suivante) sans qu'une troisième personne puisse découvrir le nombre, même en ayant écouté tous leurs échanges. L'échange Diffie-Hellman utilisateur est la partie de l'échange effectuée par l'utilisateur et l'échange Diffie-Hellman dépositaire est la partie de l'échange effectuée par le dépositaire.

Ces modes de réalisation présentent l'avantage d'avoir une interaction, de préférence téléphonique, entre l'utilisateur et un utilisateur dépositaire afin de s'assurer de l'identité de l'utilisateur. Dans ces modes de réalisation, le dépositaire et l'utilisateur s'identifient auprès du serveur et le dépositaire et l'utilisateur s'identifient entre eux, la sécurité de la sauvegarde est accrue. De plus, l'utilisation d'échanges Diffie-Hellman permet une robustesse accrue.

Dans des modes de réalisation, l'étape de demande de restauration du secret comporte une étape de notification au dépositaire d'une demande de restauration.

L'avantage de ces modes de réalisation est d'informer le dépositaire qu'une intervention dudit dépositaire dans une opération de restauration d'un secret est sollicitée.

Dans des modes de réalisation, au moins une partition correspond à un serveur et au moins une partition correspond à un utilisateur, et l'étape de déchiffrement de chaque partition correspondant à chaque serveur est effectuée après l'authentification de l'utilisateur par chaque utilisateur dépositaire.

Ces modes de réalisation présentent l'avantage d'une sécurité renforcée, le serveur ne déchiffrant et divulguant sa partition qu'après authentification multi-facteurs comportant une réponse au challenge et une authentification par chaque utilisateur dépositaire de l'utilisateur.

Dans des modes de réalisation, chaque étape de transmission, par chaque dépositaire de la partition correspondant audit dépositaire déchiffrée, est effectuée après que chaque canal sécurisé entre l'utilisateur et chaque dépositaire est établi.

L'avantage de ces modes de réalisation est d'attendre que toutes les étapes d'établissement de connexions sécurisées soient établies avant de faire le transfert des partitions à déchiffrer.

Selon un troisième aspect, la présente invention vise un dispositif de sauvegarde d'un secret, qui comporte :
- une mémoire d'un programme et
- une unité centrale qui comporte au moins un serveur et qui, en exécutant des instructions du programme, réalise les étapes du procédé de sauvegarde objet de la présente invention.

Ces modes de réalisation présentent l'avantage d'avoir un programme enregistré dans une mémoire permettant de mettre en oeuvre le procédé de sauvegarde d'un secret.

Selon un quatrième aspect, la présente invention vise un dispositif de restauration d'un secret, qui comporte :
- une mémoire d'un programme et
- une unité centrale qui comporte au moins un serveur et qui, en exécutant des instructions du programme, réalise les étapes du procédé de restauration objet de la présente invention.

L'avantage de ces modes de réalisation est de mettre en oeuvre un procédé de restauration d'un secret au moyen d'un programme enregistré dans une mémoire.

### Brève description des figures

D'autres avantages, buts et caractéristiques de l'invention ressortiront de la description non limitative qui suit d'au moins un mode de réalisation particulier d'un procédé de sauvegarde d'un secret d'un utilisateur, d'un procédé de restauration d'un secret d'un utilisateur, d'un dispositif de sauvegarde d'un secret d'un utilisateur et d'un dispositif de restauration d'un secret d'un utilisateur, dans lesquels :
- la figure 1 représente, sous forme de logigramme, les étapes d'un mode de réalisation particulier d'un procédé de sauvegarde objet de la présente invention,
- la figure 2 représente, sous forme de logigramme, les étapes d'un mode de réalisation particulier d'un procédé de restauration objet de la présente invention,
- la figure 3 représente, sous forme de logigramme, les étapes d'un deuxième mode de réalisation particulier d'un procédé de restauration objet de la présente invention,
- la figure 4 représente, sous forme de logigramme, les étapes d'un troisième mode de réalisation particulier d'un procédé de restauration objet de la présente invention,
- la figure 5 représente, sous forme de logigramme, les étapes d'un quatrième mode de réalisation particulier d'un procédé objet de la présente invention et,
- la figure 6 représente, schématiquement, un dispositif de sauvegarde d'un secret et/ou de restauration d'un secret objet de la présente invention.

### Description d'exemples de réalisation de l'invention

On note dès à présent que les figures ne sont pas à l'échelle.

On définit, dès à présent, un secret comme étant un élément d'authentification de l'utilisateur à différents services, tel une clef privée de signature, ou un mot de passe par exemple, et/ou un document chiffré.

On définit un dépositaire (« trustee » en terminologie anglo-saxonne) comme étant un utilisateur, un serveur, ou un moyen de stockage pouvant être authentifié par l'utilisateur auquel une partition du secret correspond. Le dépositaire correspond à une partition du secret mais le dépositaire n'a pas accès au contenu de cette partition du secret. Dans le cas de l'utilisation d'un serveur unique dépositaire d'une partition du secret et gérant les étapes d'un procédé de sauvegarde d'un secret objet de la présente invention et/ou les étapes d'un procédé de restauration d'un secret objet de la présente invention, ledit serveur a accès au contenu de la partition correspondant audit serveur.

On définit une application comme étant un programme informatique installé sur un ordinateur ou un terminal portable communiquant tel un téléphone mobile, préférentiellement de type Smartphone, une tablette numérique, un ordinateur portable, par exemple.

Dans les modes de réalisation décrits ci-après, chaque connexion d'un utilisateur à un serveur est protégée en confidentialité et en intégrité, et ledit serveur est authentifié par ledit utilisateur. La connexion d'un utilisateur à un serveur est effectuée au moyen d'une connexion TLS (acronyme de « Transport Layer Security » en terminologie anglo-saxonne), par exemple.

On définit, un serveur comme étant un dispositif informatique matériel ou logiciel. Un serveur peut gérer des étapes d'un procédé de sauvegarde d'un secret objet de la présente invention. Un serveur peut gérer la gestion des étapes d'un procédé de restauration d'un secret objet de la présente invention. Préférentiellement, le même serveur gère les étapes du procédé de sauvegarde d'un secret et du procédé de restauration d'un secret. Un serveur peut aussi être un dépositaire du secret. Le serveur gérant les étapes du procédé de sauvegarde d'un secret et/ou du procédé de restauration d'un secret peut être un dépositaire d'une partition du secret.

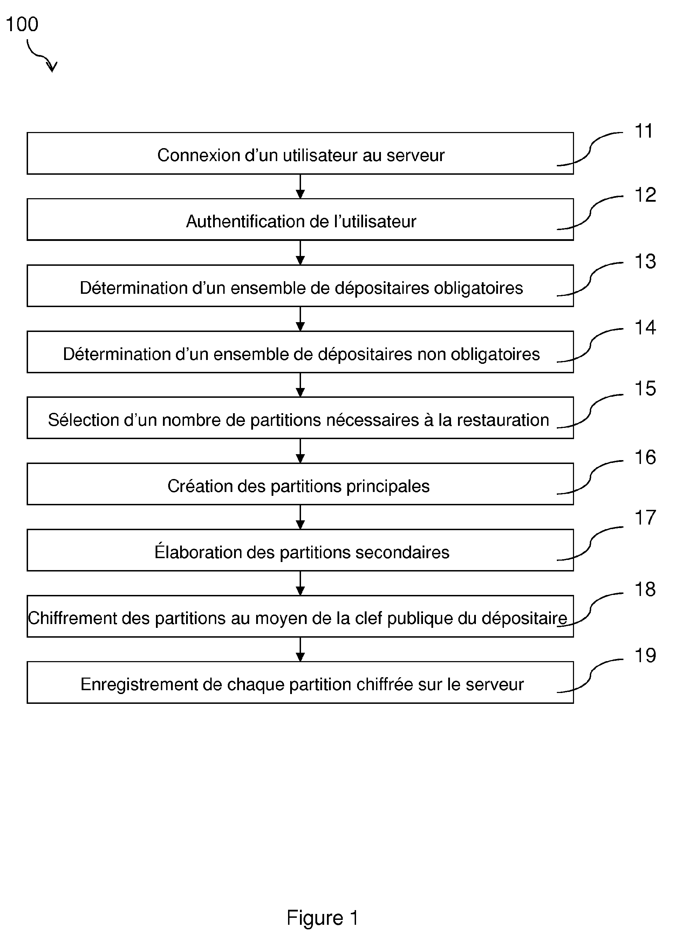

On observe sur la figure 1, les étapes d'un mode de réalisation particulier 100 d'un procédé de sauvegarde objet de la présente invention.

Le procédé 100 comporte les étapes suivantes:
- connexion 11 d'un utilisateur à un serveur,
- authentification 12 de l'utilisateur,
- détermination 13 d'un ensemble de dépositaires dit « dépositaires obligatoires », chaque dépositaire possédant une clef publique, cet ensemble étant possiblement vide,
- détermination 14 d'un ensemble de dépositaires dit « dépositaires non obligatoires », chaque dépositaire possédant une clef publique, cet ensemble étant possiblement vide,
- sélection 15 par l'utilisateur d'une valeur limite prédéterminée de nombre de partitions nécessaires pour restaurer le secret, ladite valeur limite prédéterminée étant supérieure ou égale au nombre de dépositaires obligatoires, si l'ensemble de dépositaires non obligatoires déterminé est vide
   - création 16 d'un nombre de partitions dites « partitions principales » égal au nombre de dépositaires obligatoires, chaque partition comportant au moins une partie du secret et correspondant à un dépositaire obligatoire ;
   si l'ensemble de dépositaires non obligatoires déterminé n'est pas vide
   - création 16 d'un nombre de partitions dites « partitions principales » égal au nombre de dépositaires obligatoires plus un, chaque partition comportant au moins une partie du secret et chaque partition sauf une correspondant à un dépositaire obligatoire et
   - élaboration 17 d'un nombre de partitions dites «partitions secondaires » comportant le contenu de la partition principale restante partagée selon une méthode de partage d'un secret et correspondant à un dépositaire non obligatoire ;
- chiffrement 18 de chaque partition principale et de chaque partition secondaire au moyen de la clef publique du dépositaire correspondant et
- enregistrement 19 de chaque partition chiffrée sur le serveur.

L'étape 11 de connexion d'un utilisateur au serveur est effectuée au moyen d'une application. La connexion au serveur est préférentiellement une connexion TLS.

L'étape 11 de connexion est suivie d'une étape 12 d'authentification de l'utilisateur. L'étape 12 d'authentification peut être une authentification par :
- mot de passe,
- code NIP (acronyme de « Numéro d'Identification Personnel »),
- phrase secrète,
- carte magnétique,
- RFID (acronyme de « Radio Frequency Identification » en terminologie anglo-saxonne),
- clef USB (acronyme de « Universal Serial Bus » en terminologie anglo-saxonne),
- carte à puce,
- terminal portable communiquant de type smartphone par exemple,
- empreinte digitale,
- empreinte rétinienne,
- un élément biométrique,
- reconnaissance vocale,
- ou toute autre forme d'authentification.

L'étape 12 d'authentification peut être une authentification de type authentification forte. On rappelle ici qu'en sécurité des systèmes d'information, une authentification forte est une procédure d'identification qui requiert la concaténation d'au moins deux facteurs d'authentification.

Après authentification de l'utilisateur, l'utilisateur passe à l'étape 13 de détermination d'un ensemble de dépositaires obligatoires, l'ensemble étant possiblement vide. Un dépositaire obligatoire est un dépositaire dont la partition est nécessaire au processus de restauration.

Préférentiellement, au moins un utilisateur, dit « contact », pouvant être un utilisateur dépositaire est enregistré dans l'application de l'utilisateur. Au moins un serveur, dit « serveur contact », pouvant être un serveur dépositaire est présenté à l'utilisateur au moyen de l'application de l'utilisateur. La détermination de l'ensemble de dépositaires obligatoires est une sélection par l'utilisateur d'au moins un contact enregistré et/ou un serveur contact présenté. Lors de la sélection par l'utilisateur, l'utilisateur peut désigner chaque dépositaire sélectionné comme étant un dépositaire obligatoire ou un dépositaire non obligatoire.

Une fois chaque dépositaire obligatoire désigné, l'utilisateur effectue l'étape de détermination 14 d'un ensemble de dépositaires non obligatoires, l'ensemble étant possiblement vide. Un dépositaire non obligatoire est un dépositaire correspondant à une partition secondaire.

Préférentiellement, la détermination de l'ensemble de dépositaires non obligatoires est une sélection par l'utilisateur d'au moins un contact enregistré et/ou un serveur contact présenté et désigné comme dépositaire non obligatoire. L'ensemble de dépositaires non obligatoires est vide si l'utilisateur n'a pas sélectionné de contacts ou de serveurs contacts comme étant dépositaire non obligatoire d'une partition du secret.

Chaque dépositaire possède une clef publique. Un dépositaire peut être un autre utilisateur appelé « utilisateur dépositaire » ou un serveur. L'utilisateur détermine un nombre n de dépositaires non obligatoires et un nombre p de dépositaires obligatoires.

L'étape de sélection 15 par l'utilisateur d'une valeur limite prédéterminée de nombre de partitions nécessaires pour restaurer le secret, ladite valeur limite prédéterminée étant supérieure ou égale au nombre p de dépositaires obligatoires est effectuée ensuite au moyen de l'application de l'utilisateur. La valeur limite prédéterminée peut être égale au nombre p de dépositaires obligatoires plus au moins un dépositaire non obligatoire, par exemple. La valeur limite prédéterminée est enregistrée sur le serveur. Les partitions nécessaires pour restaurer le secret sont au moins chaque partition correspondant à chaque dépositaire obligatoire.

Préférentiellement, l'application de l'utilisateur propose à l'utilisateur un nombre de dépositaires non obligatoires n tel que la valeur limite prédéterminée sélectionnée par l'utilisateur est égale à n+p, n étant un entier positif. Chaque dépositaire non obligatoire étant désigné comme tel par l'utilisateur à l'étape de détermination 14 d'un ensemble de dépositaires non obligatoires.

Au cours de l'étape de sélection 15 de la valeur limite prédéterminée, l'application enregistre sur le serveur l'identifiant de chaque dépositaire et la valeur limite prédéterminée sélectionnée par l'utilisateur. Au cours de l'étape 15, l'application utilisateur enregistre chaque dépositaire correspondant à une partition nécessaire à la restauration du secret.

Une partition du secret est préférentiellement telle que pour un nombre n de dépositaires non obligatoires et un nombre p de dépositaires obligatoires, p étant un entier positif, n étant un entier positif. Un secret K est partagé en :
- un nombre p+1 de partitions Kq dites « partitions principales » préférentiellement aléatoires, avec q un nombre entre un et p+1 telles que K = K₁ XOR ... XOR Kₚ₊₁ et
- la partition principale Kₚ₊₁ est partagée en n valeurs distinctes, dites « partitions secondaires », selon une méthode de partage du secret.

Si l'ensemble de dépositaires non obligatoires déterminé est vide le procédé passe à l'étape de création 16 d'un nombre p de partitions dites « partitions principales » égal au nombre de dépositaires obligatoires, chaque partition comportant au moins une partie du secret et correspondant à un dépositaire obligatoire. L'étape d'élaboration 17 n'est pas effectuée.

Si l'ensemble de dépositaires non obligatoire n'est pas vide, le procédé de sauvegarde passe à l'étape de création 16 d'un nombre de partitions principales égal au nombre de dépositaire obligatoires p plus un, comportant au moins une partie du secret, les p partitions principales correspondant chacune à un dépositaire obligatoire distinct, la partition restante étant partagée en partitions secondaires selon une méthode de partage du secret.

L'étape de création du nombre de partitions est telle qu'un nombre p+1 de partitions principales Kq aléatoires sont créées, avec q un nombre entre un et p+1 telles que K = K₁ XOR ... XOR Kₚ₊₁. Chaque partition Kq pour q entre 1 et p est attribuée à un dépositaire obligatoire. Une méthode de partage du secret est sélectionnée en fonction du type de secret à sauvegarder.

L'étape d'élaboration 17 consiste en l'élaboration d'un nombre n de partitions secondaires comportant le contenu de la partition restante Kₚ₊₁ du secret. Chaque partition secondaire est partagée selon une méthode de partage d'un secret et chaque partition secondaire correspond à un dépositaire non obligatoire. Chaque partition secondaire correspondant à un dépositaire non obligatoire est telle que la partition Kₚ₊₁ est partagée en n valeurs distinctes selon une méthode de partage de secret. La méthode de partage d'un secret est une méthode décrite dans l'article « « How to share a secret » de Shamir, Adi publié en novembre 1979 dans « Magazine Communications of the ACM, Volume 22 Issue 11 ».

Une fois les n+p partitions effectuées, chaque partition est chiffrée au cours de l'étape de chiffrement 18 de chaque partition au moyen de la clef publique du dépositaire correspondant.

L'étape d'enregistrement 19 de chaque partition chiffrée sur le serveur est ensuite mise en oeuvre. Le serveur enregistre au cours de l'étape d'enregistrement 19 les correspondances entre chaque partition et chaque dépositaire et consigne cette étape.

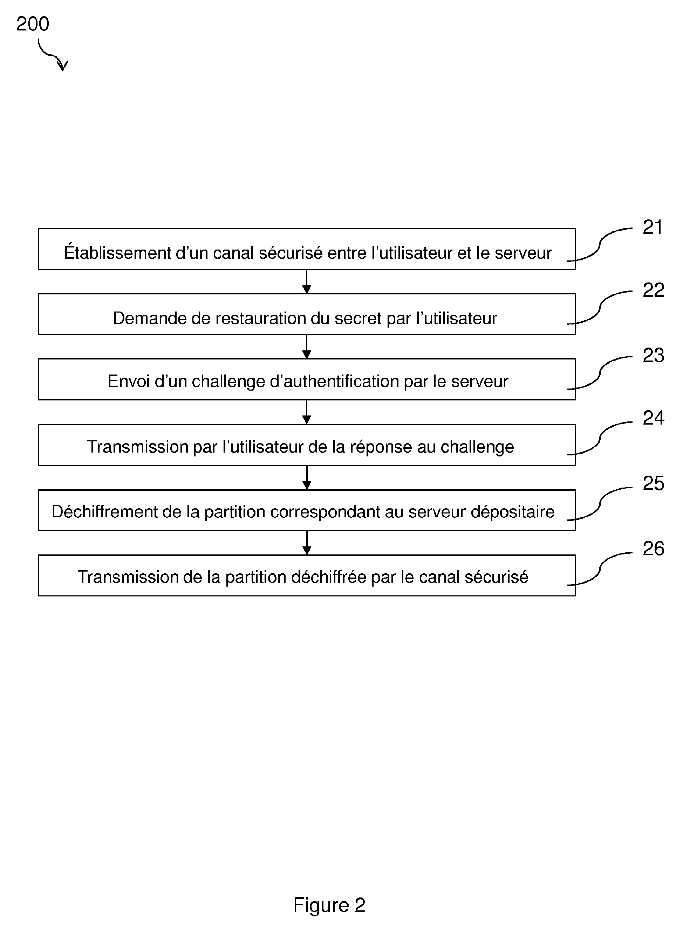

On observe sur la figure 2, les étapes d'un mode de réalisation particulier d'un procédé 200 de restauration objet de la présente invention. Le procédé 200 est un mode de réalisation dans lequel un dépositaire est un serveur. Le procédé 200 détaille les étapes pour arriver à la transmission à l'utilisateur de la partition déchiffrée correspondant à un serveur dépositaire.

Le procédé 200 comporte les étapes suivantes :
- établissement 21 d'un canal sécurisé entre l'utilisateur et un serveur dépositaire, l'utilisateur authentifiant le serveur dépositaire,
- demande 22 de restauration du secret par l'utilisateur au serveur,
- envoi 23 d'un challenge d'authentification à l'utilisateur par le serveur,
- transmission 24 par l'utilisateur au serveur de la réponse au challenge authentifiant l'utilisateur par le serveur,
- déchiffrement 25 de la partition correspondant au serveur dépositaire, la partition étant déchiffrée au moyen d'une clef privée dudit serveur dépositaire authentifié et
- transmission 26 de la partition déchiffrée par le serveur à l'utilisateur au moyen du canal sécurisé établi.

L'établissement 21 d'un canal sécurisé entre l'utilisateur et un serveur dépositaire, l'utilisateur authentifiant le serveur dépositaire, est effectuée au moyen d'une application de l'utilisateur. L'établissement 21 du canal sécurisé est préférentiellement une connexion TLS.

L'utilisateur passe à l'étape de demande 22 de restauration du secret. Préférentiellement, la demande de restauration du secret comporte des moyens d'identification du secret à restaurer. La demande est consignée par le serveur qui accepte la demande.

La demande est préférentiellement une requête effectuée au moyen d'une application de l'utilisateur. L'application de l'utilisateur comporte un élément d'interface graphique, intitulé « restaurer ses secrets » ou « j'ai perdu mes secrets » par exemple, déclenchant la requête. L'élément d'interface graphique est placé sur la page d'identification de l'utilisateur sur l'application de l'utilisateur, par exemple.

Le procédé de restauration de la partition confiée au serveur comporte une étape 23 d'envoi d'un challenge d'authentification à l'utilisateur de la part du serveur. Le challenge est préférentiellement une URI (acronyme de « Uniforme Ressource Identifier » en terminologie anglo-saxonne) envoyée par courrier électronique à l'utilisateur. Le challenge peut être envoyé par SMS (acronyme de « Short Message Service » en terminologie anglo-saxonne) ou MMS (acronyme de « Multimedia messaging Service » en terminologie anglo-saxonne). Le challenge peut être fourni par l'application de l'utilisateur.

L'étape 23 est suivie d'une étape de transmission 24 d'une réponse au challenge d'authentification au serveur. La transmission 24 de la réponse est préférentiellement effectuée au moyen du protocole TLS.

Les étapes d'envoi 23 et de transmission 24 authentifient implicitement l'utilisateur au serveur comme étant l'utilisateur légitime des moyens de réception de l'envoi du challenge, les moyens de réception étant une application par exemple. Suite à l'authentification de l'utilisateur au serveur, le serveur accepte la demande de restauration.

Une fois l'authentification validée, le serveur passe au déchiffrement 25 de la partition dont le serveur dépositaire est dépositaire au moyen de la clef privée dudit serveur dépositaire. L'étape de transmission 26 de la partition déchiffrée par le serveur à l'utilisateur au moyen du canal sécurisé est mise en oeuvre après déchiffrement de la partition par le serveur dépositaire. La transmission est préférentiellement effectuée au moyen d'un protocole TLS. Les étapes 25 et 26 sont comportées par une étape 27 de récupération par l'utilisateur d'une partition déchiffrée.

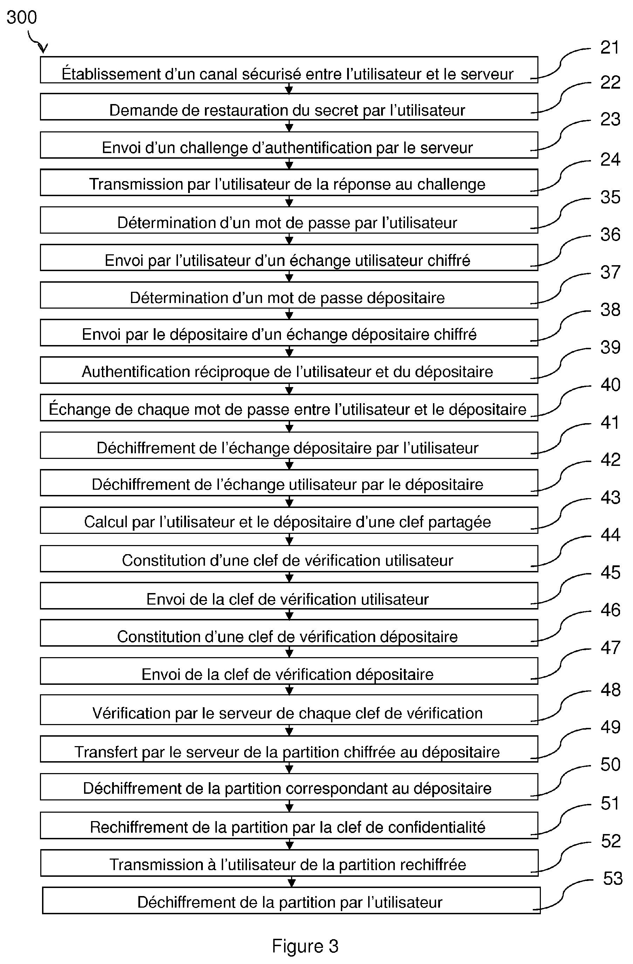

On observe sur la figure 3, les étapes d'un mode de réalisation particulier d'un procédé de restauration d'un secret objet de la présente invention.

Le procédé 300 est un mode de réalisation dans lequel un dépositaire est un utilisateur dit « utilisateur dépositaire ». Le procédé 300 détaille les étapes pour arriver à la transmission à l'utilisateur de la partition du secret déchiffrée correspondant à un utilisateur dépositaire.

Le procédé 300 comporte les étapes suivantes :
- établissement 21 d'un canal sécurisé entre l'utilisateur et un serveur, l'utilisateur authentifiant le serveur,
- demande 22 de restauration du secret par l'utilisateur au serveur,
- envoi 23 d'un challenge d'authentification à l'utilisateur par le serveur,
- transmission 24 par l'utilisateur au serveur de la réponse au challenge authentifiant l'utilisateur par le serveur,
- détermination 35 d'un mot de passe par l'utilisateur,
- envoi 36 par l'utilisateur d'un échange Diffie-Hellman dit "échange Diffie-Hellman utilisateur" chiffré par ledit mot de passe à un utilisateur dépositaire au moyen du serveur,
- détermination 37 d'un mot de passe dit « mot de passe dépositaire » par l'utilisateur dépositaire,
- envoi 38 par ledit utilisateur dépositaire d'un échange Diffie-Hellman dit « échange Diffie-Hellman dépositaire » chiffré par ledit mot de passe dépositaire à l'utilisateur au moyen du serveur,
- authentification 39 réciproque de l'utilisateur et dudit utilisateur dépositaire par un canal tiers, ne pouvant être modifié à la volée,
- échange 40 de chaque mot de passe entre l'utilisateur et ledit utilisateur dépositaire au moyen dudit canal tiers,
- déchiffrement 41 de l'échange Diffie-Hellman dépositaire au moyen du mot de passe dépositaire par l'utilisateur,
- déchiffrement 42 de l'échange Diffie-Hellman utilisateur au moyen du mot de passe par ledit utilisateur dépositaire,
- calcul 43 par l'utilisateur et ledit utilisateur dépositaire d'une clef partagée au moyen de chaque échange Diffie-Hellman,
- constitution 44 d'une clef de vérification dite « clef de vérification utilisateur » issue de la clef partagée calculée par l'utilisateur, et d'une clef de confidentialité dite « clef de confidentialité utilisateur » issue de la clef partagée calculée par l'utilisateur,
- envoi 45 au serveur de ladite clef de vérification utilisateur,
- constitution 46 d'une clef de vérification dite « clef de vérification dépositaire » issue de la clef partagée calculée par ledit utilisateur dépositaire, et d'une clef de confidentialité dite « clef de confidentialité dépositaire » issue de la clef partagée calculée par l'utilisateur dépositaire,
- envoi 47 au serveur de ladite clef de vérification dépositaire,
- vérification 48 par le serveur de chaque clef de vérification,
- transfert 49 par le serveur de la partition dépositaire chiffrée à l'utilisateur dépositaire,
- déchiffrement 50 de la partition correspondant audit utilisateur dépositaire, la partition étant déchiffrée au moyen d'une clef privée dudit utilisateur dépositaire correspondant authentifié,
- rechiffrement 51 de la partition correspondant audit utilisateur dépositaire par ledit utilisateur dépositaire au moyen de la clef de confidentialité dépositaire,
- transmission 52 par le dépositaire de la partition à l'utilisateur, chiffrée par la clef de confidentialité dépositaire,
- déchiffrement 53 par l'utilisateur de la partition transmise par l'utilisateur dépositaire au moyen de la clef de confidentialité utilisateur.

L'établissement 21 d'un canal sécurisé entre l'utilisateur et un serveur, l'utilisateur authentifiant le serveur, est effectué au moyen d'une application. L'établissement 21 du canal sécurisé est préférentiellement une connexion TLS.

L'utilisateur passe à l'étape de demande 22 de restauration du secret. La demande est consignée par le serveur qui accepte la demande. La demande est préférentiellement effectuée au moyen d'une application de l'utilisateur.

Le procédé de restauration de la partition confiée au serveur comporte une étape 23 d'envoi d'un challenge d'authentification à l'utilisateur de la part du serveur. Le challenge est préférentiellement une URI envoyée par courrier électronique à l'utilisateur. Le challenge peut être envoyé par SMS ou MMS. Le challenge peut être fourni par l'application de l'utilisateur.

L'étape 23 est suivie d'une étape de transmission 24 par l'utilisateur d'une réponse au challenge d'authentification au serveur. La transmission 24 de la réponse est préférentiellement effectuée au moyen du protocole TLS.

Les étapes d'envoi 23 et de transmission 24 authentifient implicitement l'utilisateur au serveur comme étant le propriétaire des moyens de réception de l'envoi du challenge. Suite à l'authentification de l'utilisateur au serveur, le serveur accepte la demande de restauration. Si la réponse au challenge d'authentification envoyée par l'utilisateur au serveur est erronée, le serveur met fin au procédé de restauration du secret.

Une fois l'utilisateur authentifié par le serveur et le serveur authentifié par l'utilisateur, le procédé passe à une étape de détermination 35 d'un mot de passe par l'utilisateur. Le mot de passe est déterminé au moyen d'une application de l'utilisateur. Le mot de passe est préférentiellement un code court de type NIP. Préférentiellement, le mot de passe comporte quatre chiffres.

L'étape d'envoi 36 par l'utilisateur d'un échange Diffie-Hellman dit "échange Diffie-Hellman utilisateur" chiffré par ledit mot de passe à l'utilisateur dépositaire au moyen du serveur est effectuée immédiatement après la détermination 35 du mot de passe.

Le procédé passe à une étape de détermination 37 d'un mot de passe dépositaire. Le mot de passe dépositaire est déterminé au moyen d'une application de l'utilisateur dépositaire. Le mot de passe dépositaire est préférentiellement un code court de type NIP. Le mot de passe dépositaire est préférentiellement de même format que le mot de passe déterminé à l'étape 35.

L'étape d'envoi 38 par ledit utilisateur dépositaire d'un échange Diffie-Hellman dit « échange Diffie-Hellman dépositaire » chiffré par ledit mot de passe dépositaire à l'utilisateur au moyen du serveur est effectuée immédiatement après la détermination 37 du mot de passe.

Les étapes 35 et 37 de détermination de chaque mot de passe peuvent être réalisées parallèlement. Les étapes 36 et 38 d'envoi de chaque échange Diffie-Hellman peuvent être réalisées parallèlement.

Une fois que les challenges Diffie-Hellman chiffrés ont été transmis au moyen du serveur, l'utilisateur et l'utilisateur dépositaire entrent en communication, de préférence téléphonique, et procèdent à l'étape d'authentification 39 réciproque de l'utilisateur et dudit utilisateur dépositaire par un canal tiers. Préférentiellement, le canal tiers ne peut pas être modifié à la volée. L'authentification est préférentiellement orale.

Une fois l'authentification 39 effectuée, l'utilisateur et l'utilisateur dépositaire procèdent à l'étape d'échange 40 de chaque mot de passe au moyen dudit canal tiers. L'utilisateur dépositaire transmet à l'utilisateur le mot de passe dépositaire et l'utilisateur transmet à l'utilisateur dépositaire le mot de passe au moyen dudit canal tiers. Le canal tiers étant un moyen de communication tel un appel téléphonique sécurisé par exemple.

Le déchiffrement 41 de l'échange Diffie-Hellman dépositaire est effectué au moyen du mot de passe dépositaire par l'utilisateur. Similairement, l'utilisateur dépositaire procède au déchiffrement 42 de l'échange Diffie-Hellman utilisateur au moyen du mot de passe.

Les étapes 41 et 42 peuvent être effectuées parallèlement.

Les étapes 35 à 42 constituent une étape d'établissement d'un canal sécurisé entre l'utilisateur et l'utilisateur dépositaire. L'étape d'établissement d'un canal sécurisé entre l'utilisateur et l'utilisateur dépositaire est préférentiellement sans partage préalable de secret.

Dans des modes de réalisation, les étapes 35 à 42 peuvent être remplacées par l'établissement d'un canal sécurisé au moyen du protocole ZRTP. Le protocole ZRTP étant configuré pour établir une clef partagée.

Le calcul 43 par l'utilisateur et ledit utilisateur dépositaire d'une clef partagée est effectué au moyen de chaque échange Diffie-Hellman déchiffré.

L'application utilisateur constitue 44 une clef de vérification dite « clef de vérification utilisateur » issue de la clef partagée calculée par l'utilisateur, et une clef de confidentialité dite « clef de confidentialité utilisateur » issue de la clef partagée calculée par l'utilisateur. La clef de vérification utilisateur et la clef de confidentialité utilisateur sont obtenues de manière analogue. L'application utilisateur envoie 45 au serveur ladite clef de vérification utilisateur.

L'application dépositaire constitue 46 une clef de vérification dite « clef de vérification dépositaire » issue de la clef partagée calculée par ledit utilisateur dépositaire, et d'une clef de confidentialité dite « clef de confidentialité dépositaire » issue de la clef partagée calculée par l'utilisateur dépositaire. La clef de vérification dépositaire et la clef de confidentialité dépositaire sont obtenues de manière analogue. L'application utilisateur envoie 47 au serveur ladite clef de vérification utilisateur.

Le serveur procède à la vérification 48 de chaque clef de vérification. Si les clefs de vérification sont erronées, le serveur interrompt la procédure de restauration du secret.

Une fois chaque clef de vérification vérifiée par le serveur, le serveur transfère 49 la partition dépositaire chiffrée au dépositaire.

L'utilisateur dépositaire procède au déchiffrement 50 de la partition correspondant audit utilisateur dépositaire, la partition étant déchiffrée au moyen de la clef privée dudit utilisateur dépositaire authentifié correspondant à la partition. Puis l'utilisateur dépositaire procède au rechiffrement 51 de la partition correspondant audit utilisateur dépositaire au moyen de la clef de confidentialité dépositaire calculée à l'étape 46.

L'utilisateur dépositaire procède à la transmission 52 de la partition à l'utilisateur, ladite partition est chiffrée par la clef de confidentialité dépositaire au moyen du serveur.

L'utilisateur procède ensuite au déchiffrement 53 de la partition transmise par l'utilisateur dépositaire au moyen de la clef de confidentialité utilisateur constituée à l'étape 46.

Les étapes 35 à 52 sont comportées par une étape 54 de récupération par l'utilisateur d'une partition déchiffrée.

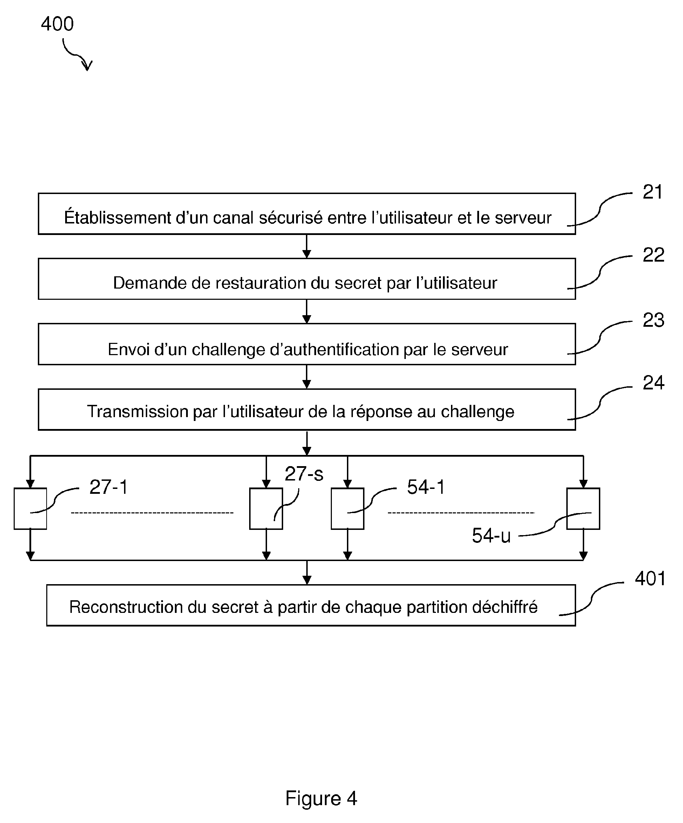

On observe sur la figure 4, les étapes d'un troisième mode de réalisation 400 d'un procédé de restauration objet de la présente invention.

Le procédé 400 est un mode de réalisation dans lequel s dépositaires sont des serveurs, avec s un entier positif et u dépositaires sont des utilisateurs dépositaires, avec u un entier positif. Le procédé 400 détaille les étapes pour arriver à la reconstruction du secret à partir d'au moins chaque partition déchiffrée correspondant à chaque dépositaire, nécessaire à la restauration du secret.

Le procédé 400 comporte les étapes suivantes :
- établissement 21 d'un canal sécurisé entre l'utilisateur et un serveur, l'utilisateur authentifiant le serveur,
- demande 22 de restauration du secret par l'utilisateur au serveur,
- envoi 23 d'un challenge d'authentification à l'utilisateur par le serveur,
- transmission 24 par l'utilisateur au serveur de la réponse au challenge authentifiant l'utilisateur par le serveur.
- récupération 27-1 à 27-s et 54-1 à 54-u, de chaque s+u partition déchiffrée par l'utilisateur, s correspondant à un nombre de serveurs dépositaires, u correspondant à un nombre d'utilisateurs dépositaires, et s+u correspondant à au moins un nombre de partitions nécessaires pour restaurer un secret et
- reconstruction 401 du secret à partir de chaque partition déchiffrée.

Les étapes 21 à 24 sont identiques aux étapes 21 à 24 détaillées pour le procédé 200 pour un serveur dépositaire ou aux étapes détaillées au procédé 300 et correspondant aux étapes 21 à 24 du procédé 200 pour un utilisateur dépositaire.

Les étapes 27-1 à 27-s sont identiques à l'étape 27 du procédé 200 pour s serveurs dépositaires. Les étapes 54-1 à 54-u sont identiques à l'étape 54 du procédé 300 pour u utilisateurs dépositaires.

Les étapes 27-1 à 27-s et 54-1 à 54-u sont effectuées parallèlement ou séquentiellement.

Chaque partition déchiffrée aux étapes 27-1 à 27-s et 54-1 à 54-u est transmise par chaque dépositaire au moyen de chaque canal sécurisé établi pour chaque dépositaire au cours d'une étape de transmission par chaque dépositaire de la partition déchiffrée correspondant audit dépositaire . Chaque partition du secret est envoyée à l'application de l'utilisateur au moyen du canal sécurisé établi. Ce canal sécurisé correspond au canal établi entre l'utilisateur et chaque dépositaire à l'étape 21 du procédé 200 pour chaque serveur dépositaire, ou aux étapes 35 à 42 du procédé 300 pour chaque utilisateur dépositaire.

L'étape de reconstruction 401 du secret à partir de chaque partition déchiffrée est mise en oeuvre par une application de l'utilisateur une fois que chaque partition nécessaire pour restaurer le secret à été déchiffrée et reçue par l'application de l'utilisateur. Les partitions nécessaires pour restaurer le secret sont au moins chaque partition dite « partition principale » correspondant à chaque dépositaire obligatoire, la correspondance étant définie au cours du procédé de sauvegarde du secret. Si, lors du procédé de sauvegarde du secret, au moins un dépositaire non obligatoire a été déterminé, un complément de partitions secondaires parmi les partitions secondaires correspondant à un dépositaire non obligatoire peut être nécessaire pour restaurer le secret. Ledit complément étant tel que la somme du nombre partitions de dépositaires obligatoires et du complément de partitions de dépositaires non obligatoires est égal à une valeur limite prédéterminée de dépositaires déterminée lors de la sauvegarde du secret. Une partition dite « partition secondaire » étant une partition correspondant à un dépositaire non obligatoire.

Dans des modes de réalisation, un serveur est un dépositaire obligatoire. Dans des modes de réalisation, un seul utilisateur dépositaire est un dépositaire obligatoire.

Dans des modes de réalisation, chaque étape de transmission, par chaque dépositaire de la partition déchiffrée correspondant audit dépositaire, est effectuée après que chaque canal sécurisé entre l'utilisateur et chaque dépositaire est établi.

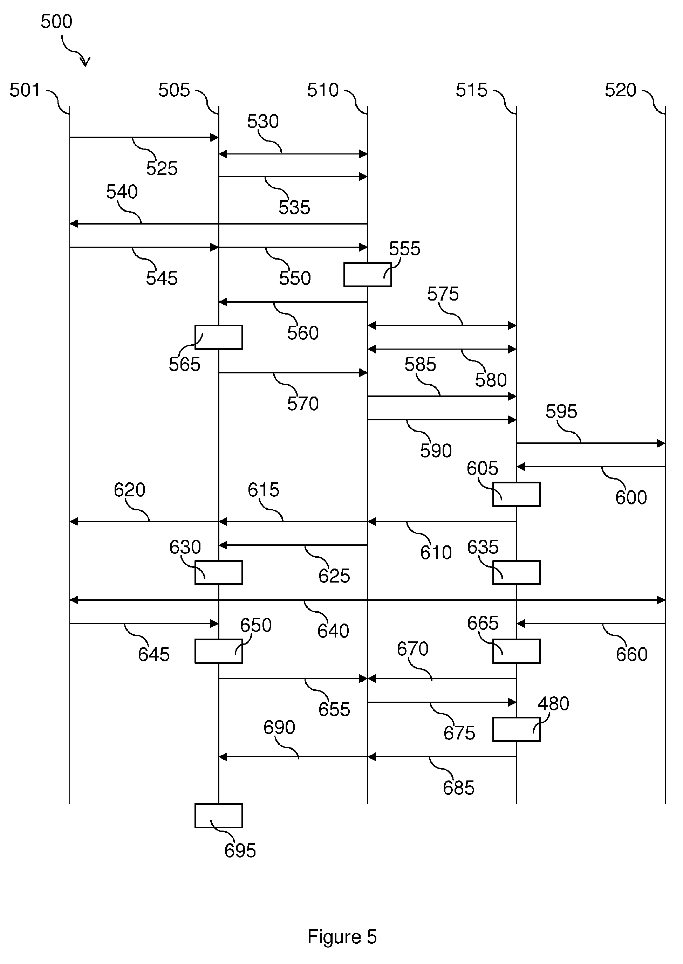

On observe sur la figure 5, les étapes d'un mode de réalisation particulier d'un procédé 500 de restauration d'un secret, objet de la présente invention. Le procédé 500 est un mode de réalisation dans lequel l'utilisateur a déterminé deux dépositaires. Les deux dépositaires sont des dépositaires obligatoires et aucun dépositaire non obligatoire n'est déterminé. Un dépositaire est un utilisateur dit « utilisateur dépositaire », le deuxième dépositaire est un serveur. Le procédé 500 détaille les étapes pour arriver au déchiffrement de chaque partition du secret. De plus les étapes de récupération de la partition correspondant au serveur dépositaire et de la partition correspondant à l'utilisateur dépositaire sont ordonnancées de manière à augmenter la sécurité et l'ergonomie du procédé de restauration.

Les étapes du procédé 500 sont effectuées par :
- un utilisateur 501,
- une application 505 dudit utilisateur 501,
- un serveur 510 sur lequel chaque partition du secret est enregistrée,
- un utilisateur dépositaire 520 ou
- une application 515 dudit utilisateur dépositaire 520 dite « application dépositaire ».

Chaque action du serveur 510 est enregistrée à des fins d'audit.

L'utilisateur 501 communique à l'application 505 une demande de restauration 525. L'application 505 effectue une connexion 530 au serveur 510. La connexion 530 au serveur 510 est préférentiellement une connexion TLS.

Après connexion 530 de l'application 505 au serveur 510, l'application 505 communique au serveur 510 une demande 535 de restauration de la partition du secret correspondant à l'utilisateur dépositaire 520. La demande 535 est consignée par le serveur 510.

Une fois la demande 535 effectuée par l'application 505, le serveur 510 envoie 540 un challenge d'authentification à l'utilisateur de la part du serveur. Le challenge est préférentiellement une URI. Le challenge est envoyé à l'utilisateur par courrier électronique si l'utilisateur a renseigné une adresse de courrier électronique. Le challenge peut être envoyé par SMS ou MMS.

L'utilisateur 501 indique 545 la réponse au challenge à l'application 505, l'application 505 relaie 550 cette réponse au serveur 510.

Le serveur 510 procède à une vérification 555 du challenge. Le serveur 510 peut rejeter la demande 535 si le challenge n'est pas vérifié. Si le challenge est vérifié, le serveur 510 communique 560 à l'application 505 que la procédure est acceptée. La vérification 555 est consignée par le serveur 510.

L'application 505 détermine 565 un code court et l'utilise pour chiffrer un challenge. Le code court est un mot de passe, par exemple. Préférentiellement, le code court est un code NIP. Préférentiellement, ledit challenge chiffré est un échange Diffie-Hellman.

L'application 505 transmet 570 au serveur 510 une valeur X* de résultat du chiffrement effectué par l'application 505.

L'utilisateur dépositaire 520 se connecte 575 au serveur 510 au moyen de l'application dépositaire 515. L'utilisateur dépositaire 520 s'authentifie 580 ensuite au serveur 510 au moyen de l'application dépositaire 515. Tant que l'utilisateur dépositaire 520 n'est pas authentifié auprès du serveur 510, le procédé 500 est mis en attente.

Puis, le serveur 510 notifie 585 à l'application dépositaire 515 la demande de restauration de l'utilisateur 501. Le serveur 510 transfert 590 la valeur X* de résultat du chiffrement à l'application dépositaire 515.

La notification 585 de la demande de restauration est signalée par l'application dépositaire 515 à l'utilisateur dépositaire 520. L'utilisateur dépositaire 520 peut accepter 600 au moyen de l'application dépositaire 515 la demande de restauration.

Une fois la demande de restauration acceptée par l'utilisateur dépositaire 520, l'application dépositaire 515 détermine 605 un code court dit « code court dépositaire » et l'utilise pour chiffrer un challenge. Le code court est un mot de passe, par exemple. Préférentiellement, le code court dépositaire est un code NIP. Préférentiellement, ledit challenge chiffré est un échange Diffie-Hellman.

L'application 515 transmet 610 au serveur 510 une valeur Y* de résultat du chiffrement effectué par l'application 515.

Puis, le serveur 510 notifie 615 à l'application 505 l'acceptation de la demande de restauration par l'utilisateur dépositaire 520. Le serveur 510 transfert 625 la valeur Y* de résultat du chiffrement du challenge à l'application dépositaire 515.

La notification 585 de la demande de restauration est signalée par l'application dépositaire 515 à l'utilisateur dépositaire 520.

Parallèlement, l'application 505 affiche 630 le code court et l'application dépositaire 515 affiche 635 le code court dépositaire.

Une communication 640 entre l'utilisateur 501 et l'utilisateur dépositaire 520 est établie par l'utilisateur 501 ou l'utilisateur dépositaire 520. L'utilisateur 501 et l'utilisateur dépositaire 520 s'identifient entre eux. L'utilisateur 501 et l'utilisateur dépositaire 520 s'échangent le code court et le code court dépositaire. Préférentiellement, la communication 640 est une communication téléphonique. Dans des modes de réalisation, la communication 640 est une communication orale, par courrier électronique, par SMS ou par MMS.

Une fois que les codes courts sont échangés, l'utilisateur 501 compose 645 le code court dépositaire au moyen de l'application 505. L'application 505 calcule un secret commun et une clef de vérification commune au moyen des valeurs x (un secret Diffie-Hellman étant tel que X = g^{x}) et Y résultat du déchiffrement du challenge Y*. La clef de vérification commune est transmise 655 par l'application 505 au serveur 510. L'étape de transmission 655 comporte une étape de confirmation au serveur 510 par l'utilisateur 501 de l'établissement d'une clef de vérification.

Une fois que les codes courts sont échangés, l'utilisateur 520 compose 660 le code court au moyen de l'application 515. L'application 515 calcule un secret commun et une clef de vérification commune au moyen des valeurs y (un secret Diffie-Hellman étant tel que Y = g^{y}) et X résultat du déchiffrement du challenge X*. La clef de vérification commune est transmise 670 par l'application 515 au serveur 510. L'étape de transmission 670 comporte une étape de confirmation au serveur 510 par l'utilisateur dépositaire 520 de l'établissement d'une clef de vérification. Le secret commun et la clef de vérification commune doivent être identiques pour le calcul 650 effectué par l'application 505 et le calcul 665 effectué par l'application 515.

Les étapes 660, 665 et 670 peuvent être réalisées parallèlement aux étapes 645, 650 et 655.

Après, réception et vérification de l'identicité de la clef de vérification commune, le serveur 510 envoie 675 à l'application dépositaire 515 la partition chiffrée par la clef publique de l'utilisateur dépositaire 520 correspondant audit utilisateur dépositaire 520. L'application 515 déchiffre 680 la partition correspondant audit utilisateur dépositaire 520 au moyen de la clef privée dudit utilisateur dépositaire 520, puis dans la même étape, l'application dépositaire 515 rechiffre la partition correspondant audit utilisateur dépositaire 520 au moyen du secret commun.

La partition rechiffrée est transférée 685 au serveur 510. Le serveur 510 déchiffre la partition dont il est dépositaire, et transmet 690 la partition déchiffrée dont ledit serveur est dépositaire et la partition rechiffrée de l'utilisateur dépositaire à l'application 505.

Finalement, l'application 505 déchiffre 695 la partition rechiffrée au moyen de la clef de vérification commune, et reconstitue le secret de l'utilisateur au moyen des deux partitions reçues.

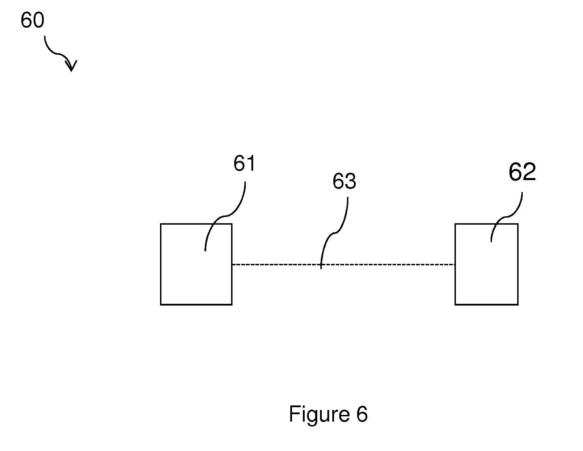

On observe sur la figure 6, un dispositif de sauvegarde 60 d'un secret objet de la présente invention et/ou de restauration d'un secret objet de la présente invention.

Le dispositif 60 comporte une mémoire 61 d'un programme et une unité centrale 62 qui comporte au moins un serveur et qui, en exécutant des instructions du programme, réalise les étapes d'un procédé de sauvegarde objet de la présente invention et/ou d'un procédé de restauration objet de la présente invention. Les étapes réalisées par le programme sont préférentiellement des étapes comprises dans les modes de réalisations particuliers détaillés des procédés 100, 200, 300, 400 et/ou 500.

L'unité centrale 62 est connectée à la mémoire 61 et accède 63 au programme stocké sur la mémoire 61. L'unité centrale 62 exécute, au moyen du serveur, les instructions du programme stocké sur la mémoire 61. Préférentiellement, le serveur enregistre chaque action effectuée à des fins d'audit.

## Revendications

1. Procédé (100) de sauvegarde d'un secret d'un utilisateur **caractérisé en ce qu'**il comporte les étapes suivantes :
- détermination (13) d'un ensemble de dépositaires dit « dépositaires obligatoires », chaque dépositaire possédant une clef publique, cet ensemble étant possiblement vide,
- détermination (14) d'un ensemble de dépositaires dit « dépositaires non obligatoires », chaque dépositaire possédant une clef publique, cet ensemble étant possiblement vide,
- sélection (15) par l'utilisateur d'une valeur limite prédéterminée de nombre de partitions nécessaires pour restaurer le secret, ladite valeur limite prédéterminée étant supérieure ou égale au nombre de dépositaires obligatoires, si l'ensemble de dépositaires non obligatoires déterminé est vide
- création (16) d'un nombre de partitions dites «partitions principales » égal au nombre de dépositaires obligatoires, chaque partition comportant au moins une partie du secret et correspondant à un dépositaire obligatoire ;
si l'ensemble de dépositaires non obligatoires déterminé n'est pas vide
- création (16) d'un nombre de partitions dites «partitions principales » égal au nombre de dépositaires obligatoires plus un, chaque partition comportant au moins une partie du secret et chaque partition sauf une correspondant à un dépositaire obligatoire et
- élaboration (17) d'un nombre de partitions dites «partitions secondaires » comportant le contenu de la partition principale restante partagée selon une méthode de partage d'un secret et correspondant à un dépositaire non obligatoire ;
- chiffrement (18) de chaque partition principale et de chaque partition secondaire au moyen de la clef publique du dépositaire correspondant et
- enregistrement (19) de chaque partition chiffrée sur un serveur.

2. Procédé (10) selon la revendication 1, dans lequel au moins un dépositaire est un serveur.

3. Procédé (10) selon l'une des revendications 1 ou 2, dans lequel au moins un dépositaire est un utilisateur.

4. Procédé (200, 300, 400) de restauration d'un secret d'un utilisateur **caractérisé en ce qu'**il comporte les étapes suivantes :
- établissement (21) d'un canal sécurisé entre l'utilisateur et au moins une valeur limite prédéterminée de dépositaires d'une partition du secret, ladite valeur limite prédéterminée correspondant à un nombre de partitions du secret nécessaires pour restaurer le secret, l'utilisateur authentifiant chaque dépositaire et chaque dépositaire authentifiant l'utilisateur,
- demande (22) de restauration du secret par l'utilisateur à un serveur,
- déchiffrement (25 ou 50) d'au moins la valeur limite prédéterminée de partitions, chaque partition étant déchiffrée au moyen d'une clef privée dudit dépositaire correspondant,
- transmission (26 ou 52) à l'utilisateur par chaque dépositaire correspondant audit dépositaire déchiffrée, au moyen du canal sécurisé établi et
- reconstruction (401) par l'utilisateur du secret à partir de chaque partition déchiffrée.

5. Procédé (200, 300 ou 400) selon la revendication 4, qui comporte, en outre, les étapes suivantes :
- envoi (23) d'un challenge d'authentification à l'utilisateur par le serveur,
- transmission (24) par l'utilisateur au serveur de la réponse au challenge d'authentification authentifiant l'utilisateur auprès du serveur.

6. Procédé (300) selon l'une des revendications 4 ou 5, qui comporte, en outre, une étape d'établissement d'un canal sécurisé entre l'utilisateur et un utilisateur dépositaire qui comporte les étapes suivantes :
- détermination (35) d'un mot de passe par l'utilisateur,
- envoi (36) par l'utilisateur d'un échange Diffie-Hellman dit "échange Diffie-Hellman utilisateur" chiffré par ledit mot de passe à un utilisateur dépositaire au moyen du serveur,
- détermination (37) d'un mot de passe dit « mot de passe dépositaire » par l'utilisateur dépositaire,
- envoi (38) par ledit utilisateur dépositaire d'un échange Diffie-Hellman dit « échange Diffie-Hellman dépositaire » chiffré par ledit mot de passe dépositaire à l'utilisateur au moyen du serveur,
- authentification (39) réciproque de l'utilisateur et dudit utilisateur dépositaire par un canal tiers,
- échange (40) de chaque mot de passe entre l'utilisateur et ledit utilisateur dépositaire au moyen dudit canal tiers,
- déchiffrement (41) de l'échange Diffie-Hellman dépositaire au moyen du mot de passe dépositaire par l'utilisateur et
- déchiffrement (42) de l'échange Diffie-Hellman utilisateur au moyen du mot de passe par ledit utilisateur dépositaire.

7. Procédé (200, 300, 400, 500) selon l'une des revendications 4 à 6, dans lequel l'étape de demande (22) de restauration du secret comporte une étape de notification (585) au dépositaire d'une demande de restauration.

8. Procédé (200, 300, 400) selon l'une des revendications 4 à 7, dans lequel au moins une partition correspond à un serveur et au moins une partition correspond à un utilisateur, et dans lequel l'étape de déchiffrement (25 ou 50) de chaque partition correspondant chaque serveur est effectuée après l'authentification de l'utilisateur par chaque utilisateur dépositaire.

9. Procédé (500) selon l'une des revendications 4 à 8, dans lequel chaque étape de transmission (685) par chaque dépositaire, de la partition correspondant audit dépositaire déchiffrée, est effectuée après que chaque canal sécurisé entre l'utilisateur et chaque dépositaire est établi.

10. Dispositif (60) de sauvegarde d'un secret, **caractérisé en ce qu'**il comporte :
- une mémoire (61) d'un programme et
- une unité centrale (62) qui comporte au moins un serveur et qui, en exécutant des instructions du programme, réalise les étapes du procédé de sauvegarde selon l'une des revendications 1 à 3.

11. Dispositif (60) de restauration d'un secret, **caractérisé en ce qu'**il comporte :
- une mémoire (61) d'un programme et
- une unité centrale (62) qui comporte au moins un serveur et qui, en exécutant des instructions du programme, réalise les étapes du procédé de restauration selon l'une des revendications 4 à 9.
